# FASCICULE DE BREVET EUROPEEN

(11) **EP 1 585 709 B1**
(45) Date de publication et mention de la délivrance du brevet: **31.08.2011**
(21) Numéro de dépôt: 04701976.5
(22) Date de dépôt: 14.01.2004
(51) Int. Cl.: C03B 37/09, H01R 13/03

(54) **PIECE DE LIAISON ELECTRIQUE POUR FILIERE DELIVRANT DES FILAMENTS NOTAMMENT DE VERRE**
ELEKTRISCHES VERBINDUNGSTEIL FÜR EINE SPINNDÜSE INSBESONDERE GLASFASERSPINNDÜSE
ELECTRICAL CONNECTION PART FOR A DIE DELIVERING FILAMENTS, ESPECIALLY GLASS FILAMENTS

(30) Priorité: 22.01.2003 FR 0300813
(43) Date de publication de la demande: 19.10.2005
(73) Titulaire: Saint-Gobain Adfors, 73000 Chambéry (FR)
(72) Inventeur: MCGILL, Newell, D., Wichita Falls, TX 76308 (US); RENAUDIN, Jean-Pierre, F-73160 St-Sulpice (FR); MOUNIER, Marc, F-38660 Le Touvet (FR)
(74) Mandataire: Aupetit, Muriel J. C.
(86) Numéro de dépôt international: PCT/FR2004/000055
(87) Numéro de publication internationale: WO 2004/075346

(56) Documents cités:
- FR-A- 2 286 114
- US-A- 2 692 296
- US-A- 6 045 669
- US-B1- 6 428 335

## Description

L'invention concerne une installation de fibrage délivrant des filaments continus, par exemple de verre, et plus particulièrement une pièce de liaison électrique via laquelle est alimenté en courant l'un des éléments de l'installation de fibrage en vue de son chauffage.

De manière classique, une installation de fibrage comporte un bloc de prise de verre (flow block) qui reçoit du verre fondu issu d'un canal relié au four dans lequel est obtenue la fusion du verre, un bloc intermédiaire (bushing block) et une filière (bushing). La filière est munie en fond d'une plaque pourvue d'une multitude d'orifices depuis lesquels s'écoule le verre fondu pour être étiré en une multiplicité - de filaments.

Ces filaments dont le diamètre peut varier de 5 à 33 µm sont rassemblés en au moins une nappe qui converge vers un dispositif d'assemblage pour former au moins une mèche et être par exemple bobinée. Selon sa destination, la mèche peut aussi être coupée (fils coupés) ou projetée sur un tapis (mats à fils continus).

Les produits obtenus sont utilisés principalement dans diverses applications de renforcement.

La filière est fabriquée en alliage de platine et de rhodium, matériaux électriquement conducteurs et résistants dans le temps à de très hautes températures. Cette filière est chauffée par effet Joule pour maintenir à une certaine température, de l'ordre de 1100 à 1400°C, le verre qu'elle contient afin - qu'il reste à l'état fondu pour être étiré depuis les orifices du fond de filière. Le chauffage de la filière est réalisé à partir d'un transformateur électrique par la connexion de deux terminaux situés chacun sur chacune des extrémités opposées de la filière, à des éléments de connexion électrique extérieurs à la filière.

Les terminaux de la filière, sont rapportés par soudage contre les parois latérales de la filière. Ils font saillie pour être raccordés aux éléments de connexion extérieurs.

Ces éléments de connexion extérieurs ou pièces de liaison électriques extérieures se présentent chacun sous la forme d'un mors en matériau électriquement conducteur qui vient par ses deux ailes pincer un terminal de la filière, le mors étant connecté à une barre d'amenée de courant qui est reliée au transformateur électrique. La connexion entre la barre et le mors est assurée par le simple contact d'une portion du mors contre la barre, celle-ci étant maintenue à la hauteur voulue par tout système approprié d'accrochage à un élément fixe de l'environnement de la filière.

Pour obtenir la meilleure conduction électrique entre un mors et la barre de connexion, ces éléments sont avantageusement en cuivre électrolytique. Une graisse adaptée à la conduction électrique est déposée entre les deux faces de contact du mors et de la barre pour autoriser un glissement entre elles. En effet, il est nécessaire de pouvoir déplacer le mors verticalement par glissement sur la barre pour augmenter ou diminuer la surface de contact entre le mors et le terminal lui étant associé de façon à ajuster la quantité de courant dissipée dans le fond de la filière et assurer ainsi son équilibre thermique.

Or, dans le temps et par ces déplacements successifs, la graisse peut devenir inhomogène, créant ainsi des petites cavités dépourvues de graisse qui peuvent provoquer des arcs électriques entre la barre et le mors, en raison du fort courant, de l'ordre de 3000 A, qui les traverse. Au fil du temps, ces arcs électriques engendrent un charbonnage des éléments, ce qui affecte le passage du courant et provoque l'érosion des éléments, nécessitant de les changer.

L'invention a pour but d'éviter ce problème.

Selon l'invention, la pièce de liaison électrique étant en un matériau électriquement conducteur et comportant au moins une surface de contact est caractérisée en ce qu'au moins la surface de contact est revêtue d'or et présente une dureté d'au moins 80HV.

Avantageusement, la pièce est entièrement revêtue d'or. L'or présente une pureté d'au moins 97%.

De préférence, l'or est dopé, plutôt au cobalt ou au nickel.

Selon une autre caractéristique, le matériau de la pièce de liaison électrique est en cuivre ou en aluminium.

L'invention est également relative à un dispositif de connexion pour une installation de fibrage comportant la pièce de liaison électrique de l'invention et une seconde pièce d'alimentation et de connexion, également en matériau électriquement conducteur tel que du cuivre ou de l'aluminium, les deux pièces coopérant par frottement selon deux surfaces de contact respectives pour assurer entre elles une connexion électrique, la surface de contact de la pièce d'alimentation et de connexion pouvant être recouverte d'argent, ou d'étain, ou de zinc, ou d'or. Néanmoins, il a été observé de façon surprenante qu'il n'est pas nécessaire de revêtir, en particulier d'or les deux pièces en contact pour résoudre le problème de l'invention. Le dépôt d'or doit avant tout être réalisé sur la pièce de liaison électrique.

Bien que l'addition d'or soit sensiblement onéreuse, cette solution assure une longévité à la pièce de liaison électrique et donc au dispositif de connexion, ce qui ne nécessite par leur changement et rentabilise au final le coût d'utilisation de la filière. En outre, cette solution assure une stabilité de la résistance de contact, donc de la chauffe de la filière.

Enfin, l'invention concerne une installation de fibrage comportant une filière depuis laquelle sont étirés les filaments et chauffée par le dispositif de connexion électrique cité ci-dessus.

La pièce de liaison électrique pour cette installation de fibrage est constituée d'un mors relié mécaniquement à un terminal de la filière, le mors étant en cuivre et revêtu sur au moins sa surface de contact d'or, et l'autre pièce d'alimentation et de connexion dudit dispositif de connexion est constituée d'une pièce fixe en cuivre maintenue à hauteur pour coopérer par sa surface de contact avec la surface de contact de la pièce de liaison.

De préférence, la filière de l'installation de fibrage est munie d'au moins deux terminaux de connexion électrique agencés sur chacune des extrémités de la filière.

Avantageusement, la pièce d'alimentation et de connexion fixe présente une géométrie adaptée de façon à mettre en contact avec sa surface de contact électrique plusieurs surfaces de contact d'une pluralité de mors respectifs qui sont chacun reliés électriquement et mécaniquement à, respectivement, un des multiples terminaux de connexion d'une extrémité de la filière.

L'invention va à présent être décrite plus en détail en regard des dessins annexés sur lesquels :
- La figure 1 illustre schématiquement une vue en élévation d'une installation de fibrage, associée au produit de fabrication ;
- La figure 2 est une vue de profil et éclatée d'une partie de la filière avec ses terminaux et d'un dispositif de connexion électrique desdits terminaux ;
- La figure 3 montre une vue de dessus des éléments de la figure 2;
- La figure 4 est une vue en coupe des éléments de la figure 3.

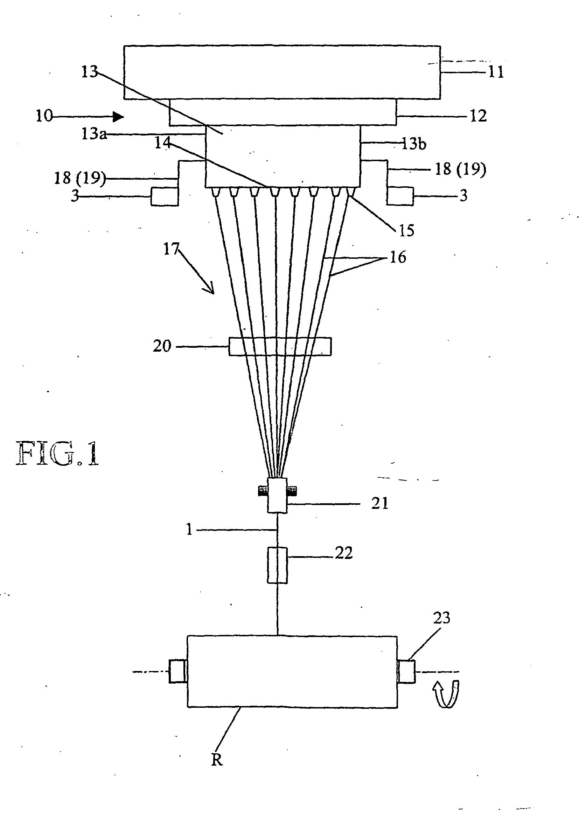

Sur la figure 1 est reproduit schématiquement une installation de fibrage 10 qui comporte de manière classique un bloc de prise de verre 11, un bloc: intermédiaire 12, et une filière 13.

La filière 13 est munie en fond d'une plaque 14 qui est pourvue d'une multitude d'orifices 15, percés dans des tétons, depuis lesquels s'écoule le verre fondu pour être étiré en une multiplicité de filaments 16. Depuis quelques années, le nombre d'orifices avoisine et même dépasse les 4000..

Les filaments sont rassemblés en une seule nappe 17 qui vient en contact avec un dispositif d'enduction 20 destiné à revêtir chaque filament d'un ensimage de type aqueux ou anhydre. Le dispositif 20 peut être constitué d'un bac alimenté en permanence par un bain d'ensimage et d'un rouleau en rotation-dont la partie inférieure est constamment immergée dans le bain. Ce rouleau se recouvre en permanence d'une pellicule d'ensimage qui est prélevée au passage par les filaments 16 glissant à sa surface.

La nappe 17 converge ensuite vers un dispositif d'assemblage 21 où les différents filaments sont réunis pour donner naissance à une mèche en fibres de verre 1. Le dispositif d'assemblage 21 peut être constitué par une simple poulie à gorge ou par une plaque munie d'une encoche.

La mèche 1 en quittant le dispositif d'assemblage 21 pénètre dans un guide-fil 22, pour être bobinée autour d'un support 23 à axe horizontal par rapport à l'arrivée verticale du fil vers le guide-fil. La mèche est ainsi bobinée en étant issue directement de la filière pour constituer un roving R.

De manière que le verre fondu délivré dans la filière 13 reste à une température de fusion suffisante et adaptée pour son passage au travers des orifices 15 et pour son étirement adéquat, on maintient chauffée cette filière.

De manière avantageuse, cette filière est constituée d'un alliage de platine-rhodium qui assure une bonne conductivité thermique, une résistance mécanique dans le temps vis-à-vis des hautes températures, ainsi qu'une bonne conductivité électrique dans l'ensemble de son corps, et au niveau de ses terminaux avec un dispositif de connexion électrique 3.

Afin d'optimiser la répartition de la puissance électrique fournie à la filière et, comme nous le verrons par la suite, de diminuer encore le risque de détérioration du dispositif de connexion électrique, on prévoit sur chaque extrémité 13a, 13b de la filière au moins un terminal, et de préférence deux terminaux 18,19.

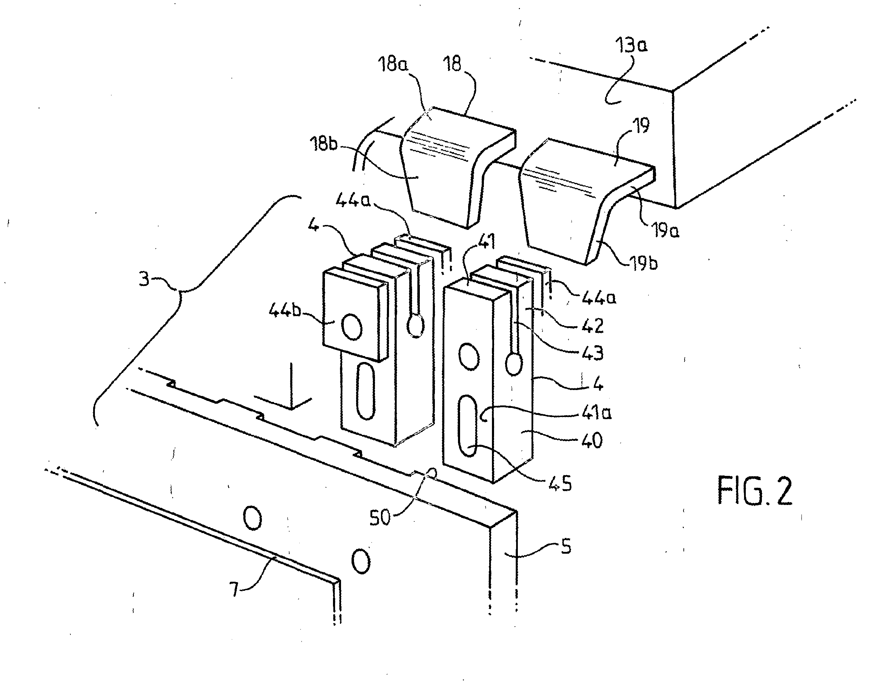

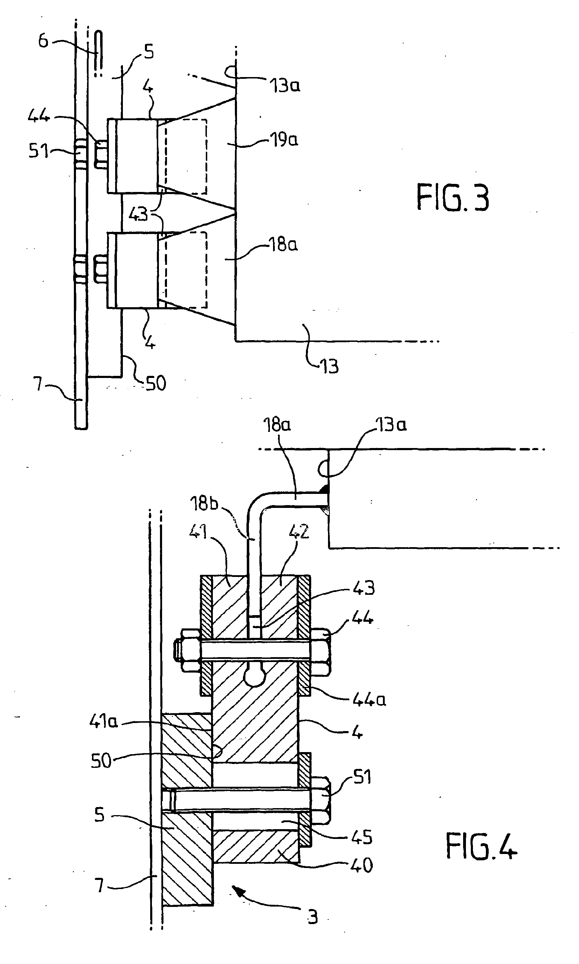

Sur les figures 2 et 3 sont illustrées les pièces de liaison électrique ou mors 4 reliant électriquement une pièce d'alimentation et de connexion 5 aux terminaux 18, 19 du côté 13a, et de manière similaire mais non illustré du côté opposé 13b de la filière. La pièce d'alimentation et de connexion 5 et le ou les mors 4 constituent le dispositif de connexion 3 associé à l'une des extrémités de la filière : pourvue de son, ou de préférence, ses terminaux.

Les deux terminaux 18 et 19 sont dans le même matériau que la filière 13 et sont rapportés de manière soudée contre chacune des extrémités 13a, 13b.

Ils se présentent sous la forme d'un L, une des ailes 18a (19a) est solidaire par son extrémité de l'extrémité 13a de la filière, tandis que l'autre aile 18b (19b) perpendiculaire à l'aile 18a et dirigée parallèlement à l'extrémité vers la partie inférieure de la filière est reliée au mors 4.

Le dispositif de connexion 3 comporte donc au moins le mors 4 destiné à être connecté à l'aile 18b (19b) d'un terminal de connexion, et la pièce d'alimentation et de connexion 5 connectée au mors 4 et reliée à un transformateur électrique non illustré par des conducteurs électriques 6.

Le mors 4 a la forme d'un U qui présente une âme 40 et deux ailes 41, 42 sensiblement en regard et perpendiculaires à l'âme de manière à constituer une gorge 43. En position de connexion, est logée dans la gorge 43 l'aile 18b (19b) , et une vis de serrage 44 traversant les ailes 41, 42 du mors réalise par serrage le contact électrique et le maintien mécanique du mors au terminal. Deux plaques de serrage 44a, 44b sont avantageusement associées à la vis de serrage 44.

La pièce d'alimentation et de connexion 5 est une barre fixée à un élément 7 de l'environnement de la filière à une hauteur adaptée à sa mise en regard avec au moins un mors. Cette pièce est connectée aux conducteurs électriques 6 d'amenée de courant. Elle est en cuivre électrolytique pour réaliser la meilleure conduction électrique du courant jusqu'au mors, relié à elle par simple contact.

La pièce 5 présente une face de connexion ou surface de contact 50 contre laquelle est plaquée la face externe 41 a de l'aile 41 du mors 40 qui constitue la surface de contact électrique du mors avec la pièce 5.

La fixation du mors 4 à la pièce 5 est réalisée par des moyens de vissage 51 traversant un évidemment 45 de l'âme 40 du mors et se logeant dans un orifice taraudé de la pièce.

Comme nous l'avons dit plus haut, il peut être préféré de disposer sur une même extrémité de la filière de plusieurs terminaux de connexion, au moins deux terminaux 18 et 19. Pour cette raison, la pièce 5 a avantageusement la forme d'une barre (figures 2 et 3) et s'étend selon la longueur de la paroi latérale 13a de la filière pour faciliter la connexion des mors 4 sur un seul élément. Ainsi, quel que soit le nombre de mors utilisés, qui sont reliés à la pluralité de terminaux de la filière, une seule pièce 5 est nécessaire pour connecter l'ensemble des mors 40.

Selon l'invention, la surface de contact 41 a d'un mors est revêtue d'une couche d'or de pureté supérieure à 97 %, d'une épaisseur d'environ 5 µm, de manière à éviter le charbonnage et à protéger ainsi le cuivre de l'érosion. De préférence, il s'agit d'or dopé, par exemple par du cobalt, ou encore par du nickel, de façon à durcir la face de- contact. La surface d'un mors revêtue d'or a une dureté-de 80 à 90 HV, la même surface de mors revêtue d'or dopé au nickel a une dureté de 140 à 160 HV, et si l'or est dopé au cobalt, la dureté est de 150 à 170 HV.

Ce revêtement d'or contre au moins la surface de contact 41a suffit pour résoudre les inconvénients de l'art antérieur. Avantageusement, l'ensemble du mors, et par conséquent les surfaces de contact avec un terminal, seront revêtus d'or de préférence dopé au cobalt pour assurer en outre une protection du cuivre contre la corrosion due à l'environnement particulièrement agressif auquel le mors est soumis.

Toutefois, en vue d'une protection supplémentaire contre la corrosion, la pièce d'alimentation et de connexion 5 en cuivre est recouverte sur ses faces exposées à l'air ambiant et de préférence au moins sur sa surface de contact électrique 50, d'un revêtement de type, argent, étain, zinc, ou or.

## Revendications

1. Pièce de liaison électrique (4) pour une installation de fibrage destinée à délivrer des filaments, notamment de verre, la pièce étant en un matériau électriquement conducteur et comportant au moins une surface de contact (41 a), **caractérisée en ce qu'**au moins la surface de contact (41 a) est revêtue d'or et présente une dureté d'au moins 80HV.

2. Pièce de liaison électrique selon la revendication 1, **caractérisée en ce que** la pièce (4) est entièrement revêtue d'or.

3. Pièce de liaison électrique selon la revendication 1 ou 2, **caractérisée en ce que** l'épaisseur de l'or et de l'ordre de 5 µm.

4. Pièce de liaison électrique selon l'une des revendications 1 à 3, **caractérisée en ce que** l'or présente une pureté d'au moins 97%.

5. Pièce de liaison électrique selon l'une quelconque des revendications précédentes, **caractérisée en ce que** l'or est dopé.

6. Pièce de liaison électrique selon la revendication 5, **caractérisée en ce que** l'or est dopé au cobalt ou au nickel.

7. Pièce de liaison électrique selon l'une des revendications précédentes, **caractérisée en ce que** le matériau de la pièce (4) est en cuivre ou en aluminium.

8. Dispositif de connexion électrique (3) pour une installation de fibrage destinée à délivrer des filaments, notamment de verre, le dispositif comportant la pièce de liaison électrique (4) selon l'une des revendications précédentes, et une pièce d'alimentation et de connexion (5), également en matériau électriquement conducteur, les pièces (4, 5) coopérant par frottement selon deux surfaces de contact respectives (41a, 50) pour assurer entre elles une connexion électrique.

9. Dispositif selon la revendication 8, **caractérisé en ce que** la pièce d'alimentation et de connexion (5) est entièrement en cuivre ou en aluminium.

10. Dispositif selon la revendication 8 ou 9, **caractérisé en ce que** la surface de contact (50) de la pièce d'alimentation et de connexion (5) est recouverte d'argent, ou d'étain, ou de zinc, ou d'or.

11. Installation de fibrage destinée à délivrer des filaments, notamment de verre, comportant une filière (13) depuis laquelle sont étirés les filaments et chauffée par un dispositif de connexion électrique (3) selon l'une des revendications 8 à 10.

12. Installation de fibrage selon la revendication 11, **caractérisée en ce que** la pièce de liaison électrique (4) est constituée d'un mors relié mécaniquement à un terminal (18, 19) de la filière (13), le mors (4) étant en cuivre et revêtu sur au moins sa surface de contact (41 a) d'or, et l'autre pièce d'alimentation et de connexion (5) du dispositif (3) est constituée d'une pièce fixe en cuivre ou en aluminium maintenue à hauteur pour coopérer par sa surface de contact (50) avec la surface de contact (41 a) de la pièce de liaison (4).

13. Installation de fibrage selon la revendication 12, **caractérisée en ce qu'**elle comporte une filière (13) munie d'au moins deux terminaux de connexion électrique (18, 19) agencés sur chacune des extrémités (13a, 13b) de la filière (13).

14. Installation de fibrage selon la revendication 13, **caractérisée en ce que** la pièce d'alimentation et de connexion fixe (5) présente une géométrie adaptée de façon à mettre en contact avec sa surface de contact électrique (50) plusieurs surfaces de contact (41a) d'une pluralité de mors respectifs (4) qui sont chacun reliés électriquement et mécaniquement à, respectivement, un des multiples terminaux de connexion (18, 19) d'une extrémité de la filière.

## Claims

1. An electrical connection part (4) for a fiberizing installation for delivering filaments, especially glass filaments, the part being made of an electrically conducting material and having at least one contact surface (41a), **characterized in that** at least the contact surface (41a) is coated with gold and has a hardness of at least 80 HV.

2. The electrical connection part as claimed in claim 1, **characterized in that** the part (4) is entirely coated with gold.

3. The electrical connection part as claimed in claim 1 or 2, **characterized in that** the thickness of the gold is around 5 µm.

4. The electrical connection part as claimed in one of claims 1 to 3, **characterized in that** the gold has a purity of at least 97%.

5. The electrical connection part as claimed in any one of the preceding claims, **characterized in that** the gold is doped.

6. The electrical connection part as claimed in claim 5, **characterized in that** the gold is doped with cobalt or nickel.

7. The electrical connection part as claimed in one of the preceding claims, **characterized in that** the material of the part (4) is copper or aluminum.

8. An electrical connection device (3) for a fiberizing installation for delivering filaments, especially glass filaments, the device comprising the electrical connection part (4) as claimed in one of the preceding claims and a supply and connection part (5), also made of an electrically conducting material, the parts (4, 5) cooperating by friction over two respective contact surfaces (41a, 50) in order to ensure electrical connection between them.

9. The device as claimed in claim 8, **characterized in that** the supply and connection part (5) is entirely made of copper or aluminum.

10. The device as claimed in claim 8 or 9, **characterized in that** the contact surface (50) of the supply and connection part (5) is covered with silver, tin, zinc or gold.

11. A fiberizing installation for delivering filaments, especially glass filaments, which includes a bushing (13) from which the filaments are drawn, said bushing being heated by an electrical connection device (3) as claimed in one of claims 8 to 10.

12. The fiberizing installation as claimed in claim 11, **characterized in that** the electrical connection part (4) consists of a jaw mechanically connected to a terminal (18, 19) of the bushing (13), the jaw (4) being made of copper and coated on at least its contact surface (41a) with gold, and the other part (5), for supply and connection, of the device (3) consists of a stationary part made of copper or aluminum and maintained at a height for cooperating via its contact surface (50) with the contact surface (41a) of the connection part (4).

13. The fiberizing installation as claimed in claim 12, **characterized in that** it includes a bushing (13) provided with at least two electrical connection terminals (18, 19) that are placed on each of the ends (13a, 13b) of the bushing (13).

14. The fiberizing installation as claimed in claim 13, **characterized in that** the stationary supply and connection part (5) has a geometry suitable for bringing into contact with its electrical contact surface (50) several contact surfaces (41a) of a plurality of respective jaws (4), each jaw being electrically and mechanically connected to, respectively, one of the multiple connection terminals (18, 19) of one end of the bushing.

## Patentansprüche

1. Elektrisches Verbindungsteil (4) für eine Faserzieheinrichtung, die dazu bestimmt ist, Filamente, insbesondere Glasfilamente bereitzustellen, wobei das Teil aus einem elektrisch leitenden Material besteht und wenigstens eine Kontaktfläche (41 a) umfasst, **dadurch gekennzeichnet, dass** wenigstens die Kontaktfläche (41 a) mit Gold beschichtet ist und eine Härte von wenigstens 80 HV aufweist.

2. Elektrisches Verbindungsteil nach Anspruch 1, **dadurch gekennzeichnet, dass** das Teil (4) vollständig mit Gold beschichtet ist.

3. Elektrisches Verbindungsteil nach Anspruch 1 oder 2, **dadurch gekennzeichnet, dass** die Dicke des Goldes in der Größenordnung von 5 µm liegt.

4. Elektrisches Verbindungsteil nach einem der Ansprüche 1 bis 3, **dadurch gekennzeichnet, dass** das Gold eine Reinheit von wenigstens 97 % aufweist.

5. Elektrisches Verbindungsteil nach einem der vorstehenden Ansprüche, **dadurch gekennzeichnet, dass** das Gold dotiert ist.

6. Elektrisches Verbindungsteil nach Anspruch 5, **dadurch gekennzeichnet, dass** das Gold mit Kobalt oder mit Nickel dotiert ist.

7. Elektrisches Verbindungsteil nach einem der vorstehenden Ansprüche, **dadurch gekennzeichnet, dass** das Material des Teils (4) aus Kupfer oder aus Aluminium besteht.

8. Elektrische Anschlussvorrichtung (3) für eine Faserzieheinrichtung, die dazu bestimmt ist, Filamente, insbesondere Glasfilamente bereitzustellen, wobei die Vorrichtung das elektrische Verbindungsteil (4) nach einem der vorstehenden Ansprüche sowie ein Versorgungs- und Anschlussteil (5), ebenfalls aus elektrisch leitendem Material umfasst, wobei die Teile (4, 5) entlang von zwei jeweiligen Kontaktflächen (41a, 50) reibend zusammenwirken, um zwischen ihnen eine elektrische Verbindung sicherzustellen.

9. Vorrichtung nach Anspruch 8, **dadurch gekennzeichnet, dass** das Versorgungs- und Anschlussteil (5) vollständig aus Kupfer oder aus Aluminium besteht.

10. Vorrichtung nach Anspruch 8 oder 9, **dadurch gekennzeichnet, dass** die Kontaktfläche (50) des Versorgungs- und Anschlussteils (5) mit Silber oder Zinn oder Zink oder Gold überzogen ist.

11. Faserzieheinrichtung, die dazu bestimmt ist, Filamente, insbesondere Glasfilamente bereitzustellen, umfassend eine Spinndüse (13), von der aus die Filamente verstreckt werden und die über eine elektrische Anschlussvorrichtung (3) nach einem der Ansprüche 8 bis 10 erhitzt wird.

12. Faserzieheinrichtung nach Anspruch 11, **dadurch gekennzeichnet, dass** das elektrische Verbindungsteil (4) von einer Backe gebildet ist, die mit einem Endstück (18, 19) der Spinndüse (13) mechanisch verbunden ist, wobei die Backe (4) aus Kupfer besteht und auf wenigstens ihrer Kontaktfläche (41 a) goldbeschichtet ist, und das andere Teil, Versorgungs- und Anschlussteil (5), der Vorrichtung (3) von einem festen Teil aus Kupfer oder Aluminium gebildet ist, das auf Höhe gehalten wird, um über seine Kontaktfläche (50) mit der Kontaktfläche (41a) des Verbindungsteils (4) zusammen zu wirken.

13. Faserzieheinrichtung nach Anspruch 12, **dadurch gekennzeichnet, dass** sie eine Spinndüse (13) umfasst, die mit wenigstens zwei Endstücken zum elektrischen Anschließen (18, 19) ausgestattet ist, die an jedem der Enden (13a, 13b) der Spinndüse (13) angeordnet sind.

14. Faserzieheinrichtung nach Anspruch 13, **dadurch gekennzeichnet, dass** das feste Versorgungs- und Anschlussteil (5) eine Geometrie aufweist, die derart angepasst ist, dass mit seiner elektrischen Kontaktfläche (50) mehrere Kontaktflächen (41a) einer Vielzahl von jeweiligen Backen (4) in Kontakt gebracht werden, die jeweils mit einem der mehreren Anschlussendstücke (18, 19) eines Endes der Spinndüse elektrisch und mechanisch verbunden sind.
